(19) Europäisches Patentamt / European Patent Office / Office européen des brevets

(11) **EP 4 564 981 A1**

(12) **EUROPEAN PATENT APPLICATION**
published in accordance with Art. 153(4) EPC

(43) Date of publication:
**04.06.2025 Bulletin 2025/23**

(21) Application number: **22958434.7**

(22) Date of filing: **15.09.2022**

(51) International Patent Classification (IPC):
***H04W 74/00*** *(2009.01)*

(52) Cooperative Patent Classification (CPC):
**H04W 74/00**

(86) International application number:
**PCT/CN2022/119033**

(87) International publication number:
**WO 2024/055241 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **RGTH
Patentanwälte PartGmbB
Neuer Wall 10
20354 Hamburg (DE)**

(54) **COMMUNICATION METHOD, TERMINAL DEVICE, AND NETWORK DEVICE**

(57)　Provided are a communication method, a terminal device, and a network device. The communication method comprises: a first terminal device determines M PSFCHs from N PSFCHs to be sent; and the first terminal device sends the M PSFCHs, wherein the N PSFCHs are PSFCHs to be sent at a first moment, the first moment is within a first shared COT, N is a positive integer, and M is an integer less than or equal to N. For a scenario where N PSFCHs need to be sent at a first moment and the first moment is within a first shared COT, the present application provides a method in which that a first terminal device can determine M PSFCHs from N PSFCHs to be sent, and send the M PSFCHs at the first moment. Thus, the present application can achieve transmission of PSFCHs in the scenario.

```
┌────────────────────────────────────┐
│  Determine M PSFCHs from N PSFCHs   │──── S1010
│         to be transmitted           │
└────────────────────────────────────┘
                  │
┌────────────────────────────────────┐
│          Transmit the M PSF         │──── S1020
└────────────────────────────────────┘
```

FIG. 10

EP 4 564 981 A1

## Description

## TECHNICAL FIELD

This application relates to the field of communications technologies, and more specifically, to a communication method, a terminal device, and a network device.

## BACKGROUND

A terminal device may perform communication transmission within a channel occupancy time (channel occupancy time, COT) shared by other communications devices. In sidelink communication, for N physical sidelink feedback channels (physical sidelink feedback channel, PSFCH) to be transmitted at a first instant, the first instant may be within a shared COT, where N may be a positive integer. In this case, how to transmit the N PSFCHs is an urgent problem to be resolved.

## SUMMARY

This application provides a communication method, a terminal device, and a network device. The following describes the aspects related to this application.

According to a first aspect, there is provided a communication method. The communication method includes: determining, by a first terminal device, M PSFCHs from N PSFCHs to be transmitted; and transmitting, by the first terminal device, the M PSFCHs, where the N PSFCHs are PSFCHs to be transmitted at a first instant, the first instant is within a first shared COT, N is a positive integer, and M is an integer less than or equal to N.

According to a second aspect, there is provided a communication method. The communication method includes: receiving, by a second terminal device, a second PSFCH, where the second PSFCH belongs to M PSFCHs, the M PSFCHs are determined from N PSFCHs to be transmitted and transmitted by a first terminal device at a first instant, and the first instant is within a first shared COT, where N is a positive integer, and M is an integer less than or equal to N.

According to a third aspect, there is provided a communication method. The communication method includes: transmitting, by a network device, second configuration information, where the second configuration information is used to determine a first value, a first class is used to determine whether a first PSFCH in N PSFCHs to be transmitted at a first instant belongs to M PSFCHs, the M PSFCHs are PSFCHs transmitted at the first instant; in a case in which a priority of the first PSFCH is less than or equal to the first value, the first PSFCH belongs to the M PSFCHs, and the first instant is within a first shared COT, where N is a positive integer, and M is an integer less than or equal to N.

According to a fourth aspect, there is provided a terminal device. The terminal device is a first terminal device, and the terminal device includes: a determining unit, configured to determine M PSFCHs from N PSFCHs to be transmitted; and a first transmitting unit, configured to transmit the M PSFCHs, where the N PSFCHs are PSFCHs to be transmitted at a first instant, the first instant is within a first shared COT, N is a positive integer, and M is an integer less than or equal to N.

According to a fifth aspect, there is provided a terminal device. The communications device is a second terminal device, and the terminal device includes: a receiving unit, configured to receive second PSFCH, where the second PSFCH belongs to M PSFCHs, the M PSFCHs are determined from N PSFCHs to be transmitted and transmitted by a first terminal device at a first instant, and the first instant is within a first shared COT, where N is a positive integer, and M is an integer less than or equal to N.

According to a sixth aspect, there is provided a network device. The network device includes: a second transmitting unit, configured to transmit second configuration information, where the second configuration information is used to determine a first value, a first class is used to determine whether a first PSFCH in N PSFCHs to be transmitted at a first instant belongs to M PSFCHs, the M PSFCHs are PSFCHs transmitted at the first instant; in a case in which a priority of the first PSFCH is less than or equal to the first value, the first PSFCH belongs to the M PSFCHs, and the first instant is within a first shared COT, where N is a positive integer, and M is an integer less than or equal to N.

According to a seventh aspect, there is provided a terminal device. The terminal device includes a processor, a memory, and a communications interface, where the memory is configured to store one or more computer programs, and the processor is configured to invoke the computer program in the memory to cause the terminal device to perform some or all of the steps in the method in the first aspect and/or the second aspect.

According to an eighth aspect, there is provided a network device. The network device includes a processor, a memory, and a communications interface, where the memory is configured to store one or more computer programs; and the processor is configured to invoke the computer program in the memory, to cause the network device to perform some or all of the steps of the method in the third aspect.

According to a ninth aspect, an embodiment of this application provides a communications system, where the system includes the foregoing terminal device and/or network device. In another possible design, the system may further include another device that interacts with the terminal device or the network device in the solutions provided in embodiments of this application.

According to a tenth aspect, an embodiment of this application provides a computer-readable storage medium. The computer-readable storage medium stores a computer program, and the computer program causes a terminal to perform some or all of the steps of the methods according to the foregoing aspects.

According to an eleventh aspect, an embodiment of this application provides a computer program product. The computer program product includes a non-transitory computer-readable storage medium that stores a computer program, and the computer program is operable to cause a terminal to perform some or all of the steps of the methods according to the foregoing aspects. In some implementations, the computer program product may be a software installation package.

According to a twelfth aspect, an embodiment of this application provides a chip. The chip includes a memory and a processor, and the processor may invoke and run a computer program in the memory, to implement some or all of the steps of the methods according to the foregoing aspects.

For a scenario where N PSFCHs are to be transmitted at a first instant and the first instant is within a first shared COT, the first terminal device determines M PSFCHs from the N PSFCHs to be transmitted, and transmit the determined M PSFCHs at the first instant according to embodiments of this application, thereby implementing PSFCH transmission in the above scenario.

## BRIEF DESCRIPTION OF DRAWINGS

FIG. 1 is a schematic diagram of a wireless communications system 100 to which embodiments of this application are applicable.

FIG. 2 is an example diagram of a broadcast-based sidelink communication manner.

FIG. 3 is an example diagram of a unicast-based sidelink communication manner.

FIG. 4 is an example diagram of a multicast-based sidelink communication manner.

FIG. 5 is an example diagram of a slot structure used for a sidelink communication system.

FIG. 6 is another example diagram of a slot structure used for a sidelink communication system.

FIG. 7 is an example diagram of a PSFCH transmission resource.

FIG. 8 is an example of a resource pool configured on an unlicensed spectrum to which embodiments of this application are applicable.

FIG. 9 is an example diagram of a plurality of PSFCH transmission opportunities.

FIG. 10 is a schematic flowchart of a communication method according to this application.

FIG. 11 is a schematic flowchart of another communication method according to this application.

FIG. 12 is a schematic flowchart of another communication method according to this application.

FIG. 13 is a schematic structural diagram of a terminal device 1300 according to an embodiment of this application.

FIG. 14 is a schematic structural diagram of a terminal device 1400 according to an embodiment of this application.

FIG. 15 is a schematic structural diagram of a network device 1500 according to an embodiment of this application.

FIG. 16 is a schematic structural diagram of an apparatus according to an embodiment of this application.

## DESCRIPTION OF EMBODIMENTS

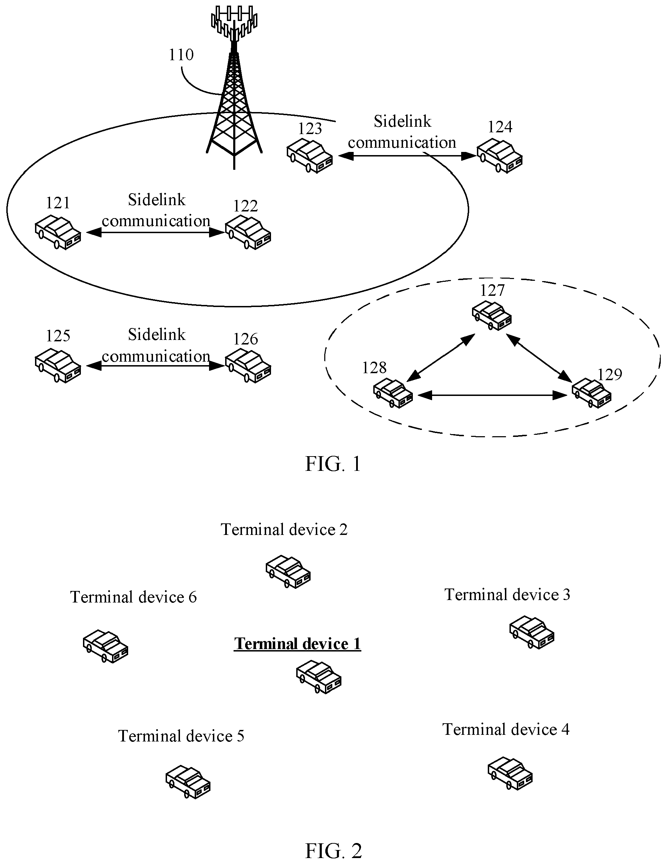

The technical solutions in this application are described below with reference to the accompanying drawings. For ease of understanding, the following first describes terms and communication processes involved in this application with reference to FIG. 1 to FIG. 9.

Communications system

FIG. 1 shows a wireless communications system 100 to which embodiments of this application are applicable. The wireless communications system 100 may include one or more communications devices. For example, the one or more communications devices may include a network device 110 and terminals 121 to 129. The network device 110 may provide communication coverage for a specific geographic area, and may communicate with a terminal located in the coverage.

In some implementations, terminal devices may communicate with each other by using a sidelink (sidelink, SL). Sidelink communication may also be referred to as proximity services (proximity services, ProSe) communication, unilateral communication, side link communication, device-to-device (device to device, D2D) communication, or direct link communication. A vehicle to everything (vehicle to everything, V2X) system may also be implemented in a manner of direct communication between terminals (that is, sidelink communication).

In other words, sidelink data is transmitted between terminals over a sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, a PSFCH, a sidelink synchronization signal block (sidelink synchronization signal block, S-SSB), a channel state information reference signal (channel state information reference signal, CSI-RS), or a phase tracking reference signal (phase tracking reference signal, PT-RS). The S-SSB includes a sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH).

Compared with a conventional cellular system in which communication data is received or transmitted by a network device, sidelink communication has higher spectrum efficiency and a lower transmission delay.

Several common sidelink communication scenarios are described below with reference to FIG. 1. Sidelink communication may be classified into three scenarios depending on whether terminals on a sidelink are located in the coverage of the network device. In a scenario 1, the terminals perform sidelink communication within the coverage of the network device. In a scenario 2, some of the terminals perform sidelink communication within the coverage of the network device. In a scenario 3, the terminals perform sidelink communication outside the coverage of the network device.

As shown in FIG. 1, in the scenario 1, terminals 121 and 122 may communicate with each other by using a sidelink, and the terminals 121 and 122 are both within the coverage of the network device 110. In other words, the terminals 121 and 122 are both within a coverage of a same network device 110. In this scenario, the network device 110 may transmit configuration signalling to the terminals 121 and 122, and accordingly, the terminals 121 and 122 communicate with each other by using the sidelink based on the configuration signalling.

As shown in FIG. 1, in the scenario 2, terminals 123 and 124 may communicate with each other by using a sidelink, the terminal 123 is within the coverage of the network device 110, and the terminal 124 is outside the coverage of the network device 110. In this scenario, the terminal 123 receives configuration information from the network device 110, and performs communication by using the sidelink based on a configuration of configuration signalling. However, since the terminal 124 is outside the coverage of the network device 110, the terminal 124 cannot receive the configuration information from the network device 110. In this case, the terminal 124 may obtain a configuration of sidelink communication based on pre-configured (pre-configuration) information and/or configuration information transmitted by the terminal 123 within the coverage, so that the terminal 124 communicates with the terminal 123 by using the sidelink based on the obtained configuration.

In some cases, the terminal 123 may transmit the configuration information to the terminal 124 through a sidelink broadcast channel (physical sidelink broadcast channel, PSBCH), to instruct the terminal 124 to communicate by using the sidelink.

As shown in FIG. 1, in the scenario 3, terminals 125 to 129 are all outside the coverage of the network device 110 and cannot communicate with the network device 110. In this case, all the terminals may perform sidelink communication based on pre-configuration information.

In some cases, the terminals 127 to 129 outside the coverage of the network device may form a communication cluster, and the terminals 127 to 129 in the communication cluster may communicate with each other. In addition, the terminal 127 in the communication cluster may serve as a central control node, which is also referred to as a cluster header (cluster header, CH). Correspondingly, the other terminals in the communication cluster may be referred to as "cluster members".

The terminal 127, as the CH, may have one or more of the following functions: being responsible for establishment of the communication cluster; joining and deleting of a cluster member; resource coordination, allocation of sidelink transmission resources for the cluster members, and receiving of sidelink feedback information from the cluster members; or resource coordination with another communication cluster.

It should be noted that FIG. 1 exemplarily shows one network device and a plurality of terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a sixth-generation mobile communications system or a satellite communications system.

The terminal in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to serve as a base station. For example, the terminal device may function as a scheduling entity that provides sidelink data between terminal devices in V2X, D2D, or the like. For example, a cellular phone and a car communicate with each other by using sidelink data. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that assumes the function of a base station in D2D, V2X, and machine-to-machine (machine-to-machine, M2M) communications, a network-side device in a 6G network, a device that assumes the function of a base station in a future communication system, or the like. The base station may support networks of a same access technology or different access technologies. A specific technology and a specific device form used by the network device are not limited in embodiments of this application.

The base station may be stationary or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of a communications device in this application may also be implemented by software functions running on hardware, or by virtualization functions instantiated on a platform (for example, a cloud platform).

Mode of sidelink communication

Two modes (or referred to as transmission modes) of sidelink communication are defined in some standards or protocols (for example, 3rd Generation Partnership Project (3rd generation partnership project, 3GPP)): a first mode and a second mode.

In the first mode, a resource (the resource mentioned in this application may also be referred to as a transmission resource, such as a time frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario in which there is coverage of the network device, for example, the scenario shown in FIG. 1 above. In the scenario shown in FIG. 1, the terminal device 121 is located within the network of the network device 110. Therefore, the network device 110 may allocate, to the terminal device 121, a resource used for a sidelink transmission process.

In the second mode, the terminal device may independently select one or more resources from a resource pool (resource pool, RP). Then, the terminal device may perform sidelink transmission by using the selected resource. For example, in the scenario shown in FIG. 1, the terminal device 124 is located out of the cell coverage. Therefore, the terminal device 124 may independently select a resource from a pre-configured resource pool, to perform sidelink transmission. Alternatively, in the scenario shown in FIG. 1, the terminal device 121 may independently select one or more resources from a resource pool configured by the network device 110 to perform sidelink transmission.

## Data transmission modes of sidelink communication

Some sidelink communications systems (for example, LTE-V2X) support a broadcast-based data transmission mode (referred to as broadcast transmission for short). For the broadcast transmission, a receive end terminal device (referred to as a receiving terminal for short) may be any terminal device around a transmit end terminal device. For example, in FIG. 2, a terminal device 1 is a transmit end terminal device, and a receive end terminal device corresponding to the transmit end terminal device (referred to as a transmitting terminal for short) may be any terminal device around the terminal device 1, for example, may be a terminal device 2 to a terminal device 6 in FIG. 2.

In addition to the broadcast transmission, some communications systems also support a unicast-based data transmission mode (referred to as unicast transmission for short) and/or a multicast-based data transmission mode (referred to as multicast transmission for short). For example, NR-V2X expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

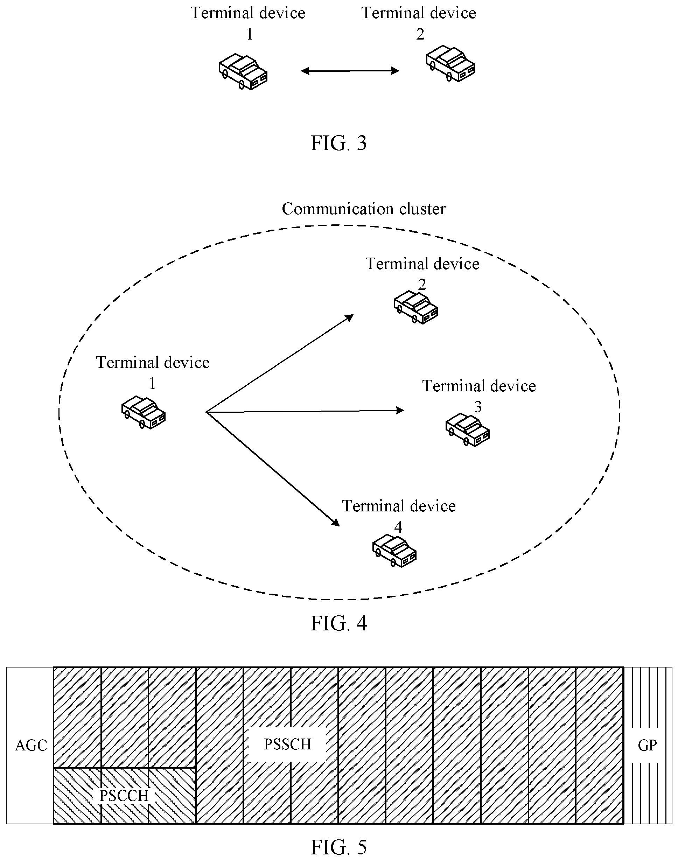

For the unicast transmission, generally only one terminal device serves as the receive end terminal device. For example, in FIG. 3, unicast transmission is performed between a terminal device 1 and a terminal device 2. The terminal device 1 may be a transmit end terminal device, and the terminal device 2 may be a receive end terminal device. Alternatively, the terminal device 1 may be a receive end terminal device, and the terminal device 2 may be a transmit end terminal device.

For the multicast transmission, the receive end terminal device may be a terminal device in a communication group (group), or the receive end terminal device may be a terminal device within a specific transmission distance. For example, in FIG. 4, a terminal device 1, a terminal device 2, a terminal device 3, and a terminal device 4 constitute a communication group. If the terminal device 1 transmits data, all the other terminal devices (the terminal device 2 to the terminal device 4) in the group may be receive end terminal devices.

## Structure of a system frame

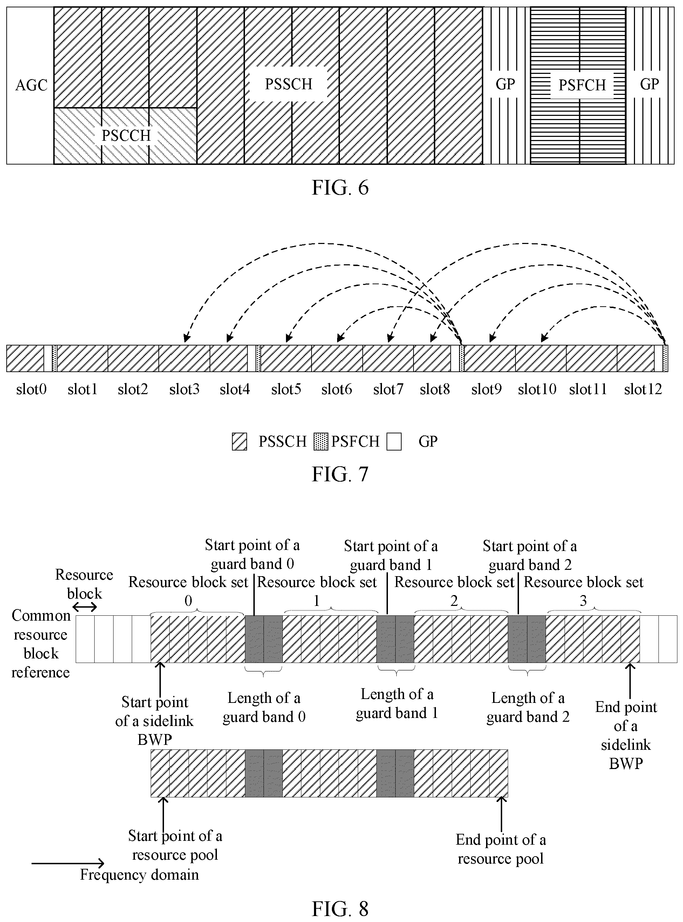

With reference to FIG. 5 and FIG. 6, the following describes a frame structure of a sidelink system frame (slot) to which embodiments of this application are applicable. FIG. 5 shows a frame structure of a system frame that does not carry a PSFCH in NR-V2X. FIG. 6 shows a frame structure of a system frame that carries a PSFCH in NR-V2X.

Referring to FIG. 5, in time domain, a PSCCH occupies two or three sidelink symbols starting from a second sidelink symbol (for example, an orthogonal frequency division multiplexing (orthogonal frequency division multiplexing, OFDM) symbol) of a system frame. In frequency domain, the PSCCH may occupy {10, 12 15, 20, 25} physical resource blocks (physical resource block, PRB). Generally, to reduce complexity of blind detection performed by a terminal device on the PSCCH, only one PSCCH symbol quantity and only one PRB quantity are allowed to be configured in one resource pool. In addition, since a sub-channel is a minimum granularity for PSSCH resource allocation specified in NR-V2X, a quantity of PRBs occupied by the PSCCH has to be less than or equal to a quantity of PRBs included in one sub-channel in the resource pool, to avoid additional limitations on PSSCH resource selection or allocation.

Continuing to refer to FIG. 5, in time domain, a PSSCH also starts from the second sidelink symbol of the system frame. The last time domain symbol of the system frame may be a guard period (Guard Period, GP) symbol, and the remaining symbols may be mapped to the PSSCH. The PSSCH may occupy K sub-channels in frequency domain, and each sub-channel may include N consecutive PRBs.

Generally, the last symbol of the system frame is a GP symbol. In addition, the first sidelink symbol of the system frame may be a repetition of the second sidelink symbol. Generally, when receiving the system frame, a terminal device may use the first sidelink symbol as an automatic gain control (automatic gain control, AGC) symbol. Generally, data on the AGC symbol is not used for data demodulation.

Referring to FIG. 6, when a system frame carries a PSFCH channel, the last but one sidelink symbol and the last but two sidelink symbol in the system frame may be used for PSFCH transmission. Data on the two PSFCH symbols described above may be identical. The first PSFCH symbol may be used for AGC. In addition, a sidelink symbol before the sidelink symbols that carry the PSFCH in the system frame may be used as a GP symbol.

## Resources for the PSFCH

To reduce overheads of a PSFCH channel, one slot in every P slots may include a PSFCH transmission resource. In other words, a period of sidelink feedback resources may be P slots. A value of P may meet: P = {1, 2, 4}. The parameter P may be pre-configured or configured by a network device. FIG. 7 is an example diagram of a PSFCH transmission resource. In FIG. 7, one PSFCH transmission resource may be included in every four slots (slot), that is, P = 4.

There is a minimum time interval between a PSSCH and a PSFCH associated with the PSSCH. The minimum time interval may be, for example, two slots. Continuing to refer to FIG. 7, for PSSCHs transmitted in slots 3, 4, 5, and 6, feedback information for the PSSCHs may be transmitted in a slot 8. Therefore, slots {3, 4, 5, 6} may be considered as a slot set. A PSFCH corresponding to a PSSCH transmitted in a slot set may be within a same slot as the PSSCH. It should be noted that FIG. 7 schematically shows time domain locations of a PSSCH and a PSFCH when the PSSCH and the PSFCH are included in a slot. As shown in FIG. 7, symbols before the PSFCH may include a GP symbol. It should be noted that FIG. 7 is merely schematic, and some transmission resources are not shown in FIG. 7. For example, a last GP symbol in the slot is not shown in FIG. 7.

Unlicensed spectrum communication

Unlicensed spectrum is a spectrum that is classified by a country and a region and that can be used for communication of a radio device. The spectrum is generally considered as a shared spectrum. That is, a communications device can use the spectrum provided that a regulatory requirement set for the spectrum by a country or a region is met, without applying for a dedicated spectrum grant from a dedicated spectrum management authority of the country or the region. The unlicensed spectrum may also be referred to as a shared spectrum, a grant-free spectrum, a license-free spectrum, an unlicensed band, a license-free band or grant-free band, or the like.

In an LTE system, unlicensed spectrum is used as a supplementary band to licensed spectrum for cellular networks. An NR system may achieve seamless coverage, high spectral efficiency, high peak rates, and high reliability for cellular networks. For the NR system, the unlicensed spectrum may be applied to 5G cellular network technologies to provide services to users. In the 3GPP R16 standard, an NR system operating on unlicensed spectrum is discussed, referred to as an NR-based access to unlicensed spectrum (NR-based access to unlicensed spectrum, NR-U) system.

To enable communications systems that perform wireless communication by using an unlicensed spectrum to coexist on the spectrum, some countries or regions put forward regulatory requirements that has to be met when the unlicensed spectrum is used. For example, a communications device follows a rule of "listen-before-talk (listen-before-talk, LBT)", that is, before transmitting a signal on a channel of an unlicensed spectrum, the communications device needs to perform channel listening; and the communications device can transmit the signal only when a result of the channel listening is that a channel is idle. If the result of the channel listening performed by the communications device on the channel of the unlicensed spectrum is that the channel is busy, the communications device may not transmit a signal. After LBT on a channel of an unlicensed spectrum succeeds, a time length for which the communications device performs signal transmission by using the channel of the unlicensed spectrum may be represented by a COT. To ensure fairness, in one time of transmission, duration for which the communications device performs signal transmission by using a channel of an unlicensed spectrum cannot exceed a maximum channel occupancy time (maximum channel occupancy time, MCOT).

A type of a channel access procedure may include a channel access procedure type 1 (type1) and a channel access procedure type 2 (type2). The channel access procedure type 1 may also be referred to as a type 1 channel access procedure, and the channel access procedure type 2 may also be referred to as a type 2 channel access procedure. The channel access procedure type 1 is based on multi-slot channel detection which is achived based on random backoff by adjusting a contention window size, and a corresponding channel access priority (channel access priority class, CAPC) may be selected based on a priority of a service to be transmitted. The channel access procedure type 2 is a channel access manner based on a listening slot of a fixed length. In embodiments of this application, a channel access mode is also referred to as an LBT mode, and a channel access procedure is also referred to as an LBT procedure.

The channel access procedure type 1 is mainly used for a communications device to initiate channel occupation. The channel access procedure type 2 is mainly used for a communications device to share channel occupation.

The channel access procedure type 2 includes type 2A channel access procedure (type2A), type 2B channel access procedure (type2B), and type 2C channel access procedure (type2C). The following describes the type 2A, the type 2B, and the type 2C.

In a case in which the communications device performs channel access by using the type 2A, the communications device performs channel detection of 25 $\mu$s ($\mu$s). Specifically, in a case in which channel access of the type 2A channel access procedure is performed, the communications device may perform channel listening of 25 $\mu$s before transmission starts, and perform transmission after the channel listening succeeds (that is, a channel is idle).

In a case in which the communications device performs channel access by using the type 2B, the communications device performs channel detection of 16 $\mu$s. Specifically, in a case in which channel access of the type 2B channel access procedure is performed, the communications device may perform channel listening of 16 $\mu$s before transmission starts, and perform transmission after the channel listening succeeds (that is, a channel is idle). An interval between a start location of the current transmission and an end location of previous transmission is 16 $\mu$s, or an interval between a start location of the current transmission and an end location of previous transmission is greater than or equal to 16 $\mu$s and less than 25 $\mu$s.

In a case in which the communications device performs channel access by using the type 2C, the communications device may perform transmission without performing channel detection after the interval expires. Specifically, in a case in which channel access of the type 2C channel access procedure is performed, the communications device may directly perform transmission, where an interval between a start location of the current transmission and an end location of previous transmission is less than or equal to 16 μs. A duration of the transmission does not exceed 584 μs.

COT sharing mechanism

After a communications device initiates a COT, in addition to using a resource within the COT for transmission, the communications device may share the resource within the COT with another communications device for transmission. For example, a first communications device may initiate a shared COT, and the acquired COT may be shared with a second communications device for service transmission. A principle of the COT sharing may include: a CAPC level corresponding to a service to be transmitted by the second communications device should not be lower than a CAPC class used when the first communications device acquires the COT.

As described above, in a case in which the first communications device shares a resource within the COT with the second communications device, the second communications device may perform channel access by using the channel access procedure type 2.

In some communications systems (for example, an NR-U system), when the network device successfully performs channel access by using the type 1 and performs downlink transmission by using a channel, the network device may share the channel with a terminal device for uplink transmission. In this case, the terminal device may perform only the type 2 channel access procedure, without performing the type 1 channel access procedure. Alternatively, when the terminal device successfully performs channel access by using the type 1, and performs uplink transmission by using a channel, the terminal device may share the channel with the network device for downlink transmission. In this case, the network device may perform only the type 2 channel access procedure, without performing the type 1 channel access procedure.

Some communications systems (for example, a sidelink over unlicensed spectrum (sidelink over unlicensed spectrum, SL-U) system) support a COT sharing mechanism between terminal devices. That is, when a terminal device successfully performs channel access by using the type 1 and performs sidelink transmission by using a channel, the terminal device may share the channel with another terminal device for sidelink transmission. For example, a terminal device 1 successfully performs channel access by using the type 1, and transmits a PSCCH/PSSCH to a terminal device 2. The terminal device 1 may share a COT with the terminal device 2, so that the terminal device 2 transmits a PSFCH to the terminal device 1. In this case, the terminal device 2 needs to perform only a channel access procedure of the type 2 within the shared COT.

Resource block set

FIG. 8 is an example of a resource pool configured on an unlicensed spectrum to which embodiments of this application are applicable. In an SL-U system, a resource pool may be configured, by using pre-configuration information or network configuration information, on an unlicensed spectrum or a shared spectrum for sidelink transmission. In some implementations, the resource pool includes $M_1$ resource block sets (resource block set, RB set), one resource block set may include $M_2$ resource blocks (resource block, RB), and $M_1$ and $M_2$ are positive integers. In some implementations, one resource block set corresponds to one channel (channel) on an unlicensed spectrum (or a shared spectrum), or one resource block set corresponds to a minimum frequency domain granularity for performing LBT, or one resource block set corresponds to an LBT sub-band.

For example, a bandwidth corresponding to a channel on an unlicensed spectrum may be 20 MHz, that is, a bandwidth corresponding to one resource block set may also be 20 MHz. Alternatively, a bandwidth of a channel on an unlicensed spectrum may be 20 MHz, which corresponds to $M_3$ RBs. The $M_3$ Rbs may be all RBs included within one channel, or all RBs that may be used for data transmission within one channel. For example, if $M_3 = 100$ (corresponding to a subcarrier spacing of 15 kHz), one RB set also corresponds to 100 RBs, that is, $M_2 = 100$.

For another example, on unlicensed spectrum, whether an unlicensed spectrum is allowed to be used needs to be determined by using a result of LBT. If a minimum frequency domain granularity for performing LBT is 20 MHz, one resource block set corresponds to a quantity of RBs included in 20 MHz. Alternatively, one RB set includes $M_2 = 100$ RBs (corresponding to a subcarrier spacing of 15 kHz), and a minimum frequency domain granularity for performing LBT is one RB set, that is, 100 RBs.

It should be noted that in embodiments of this application, the resource block set may also be referred to as a channel or an LBT sub-band, which is not limited in embodiments of this application.

In some implementations, a frequency domain start location of the resource pool is the same as a frequency domain start location of a first resource block set in the $M_1$ resource block sets, where the first resource block set is a resource block set with lowest frequency domain location in the $M_1$ resource block sets.

In some implementations, a frequency domain end location of the resource pool is the same as a frequency domain end location of a second resource block set in the $M_1$ resource block sets, where the second resource block set is a resource block set with a highest frequency domain location in the $M_1$ resource block sets.

For example, the resource pool includes $M_1 = 3$ resource block sets, and indices of the corresponding resource block sets are respectively a resource block set 0, a resource block set 1, and a resource block set 2. A frequency domain location of the resource block set 0 is the lowest, and a frequency domain location of the resource block set 2 is the highest. Therefore, a frequency domain start location of the resource pool is the same as a frequency domain start location of the resource block set 0, or a frequency domain start location of the resource pool is determined based on a frequency domain start location of the resource block set 0. A frequency domain end location of the resource pool is the same as a frequency domain end location of the resource block set 2, or a frequency domain end location of the resource pool is determined based on a frequency domain end location of the resource block set 2.

In some implementations, a guard frequency band (Guard Band, GB) is included between two adjacent resource block sets in the $M_1$ resource block sets included in the resource pool. The guard frequency band may also be referred to as a guard band.

In some implementations, a frequency domain start location and a frequency domain size of the guard band may be determined based on pre-configuration information or network configuration information. A terminal acquires pre-configuration information or network configuration information, where the pre-configuration information or the network configuration information is used to configure a guard band. In some implementations, the guard band is used to separate RB sets.

For example, reference is made to FIG. 8 for understanding. Three guard bands are configured in a sidelink bandwidth part (bandwidth part, BWP), and are respectively a guard band 0, a guard band 1, and a guard band 2. The three guard bands separate to form four resource block sets. A frequency domain start location and a frequency domain end location of each resource block set may be determined based on a frequency domain start location of each guard band (that is, a starting point of the guard band shown in FIG. 8) and a frequency domain size of the guard band (that is, a length of the guard band shown in FIG. 8). A sidelink BWP includes the four resource block sets, and one sidelink resource pool is configured in the sidelink BWP. The sidelink resource pool includes three resource block sets, that is, a resource block set 0 to a resource block set 2. Therefore, a frequency domain start location of the resource pool (that is, a starting point of a resource pool shown in FIG. 8) corresponds to a frequency domain start location of the resource block set 0, and a frequency domain end location of the resource pool (that is, an ending point of the resource pool shown in FIG. 8) corresponds to a frequency domain end location of the resource block set 2.

Mechanism for a plurality of PSFCH transmission opportunities

In some communications systems (such as an SL-U system) based on unlicensed spectrum, a terminal device may determine whether a channel is available. If the channel is available, sidelink transmission may be performed. Otherwise, sidelink transmission may not be performed. A PSSCH supports a retransmission mechanism. Therefore, even if channel access is unsuccessful, the transmitting end may still perform retransmission of the PSSCH. However, in some communications system (such as an NR SL system) based on licensed spectrum, a PSFCH supports only one transmission opportunity, that is, a PSFCH corresponding to one PSSCH has only one transmission opportunity. Therefore, in a communications system based on unlicensed spectrum (such as an SL-U system), to solve a problem of a PSFCH failing to be transmitted due to a channel access failure, a mechanism for a plurality of PSFCH transmission opportunities may be introduced. That is, one PSFCH may have a plurality of transmission opportunities. A total quantity of transmission opportunities may be w, and w may be an integer greater than 1. An index value k of a transmission opportunity may be {0, ......, w-1}. A higher index value of a transmission opportunity indicates a later transmission instant corresponding to the transmission opportunity. The terminal device may perform channel access before a plurality of PSFCH transmission opportunities, and may perform PSFCH transmission once channel access is successful. However, the terminal device transmits the PSFCH at most once. That is, if the PSFCH is successfully transmitted, the PSFCH is unnecessary to be transmitted at a subsequent transmission opportunity.

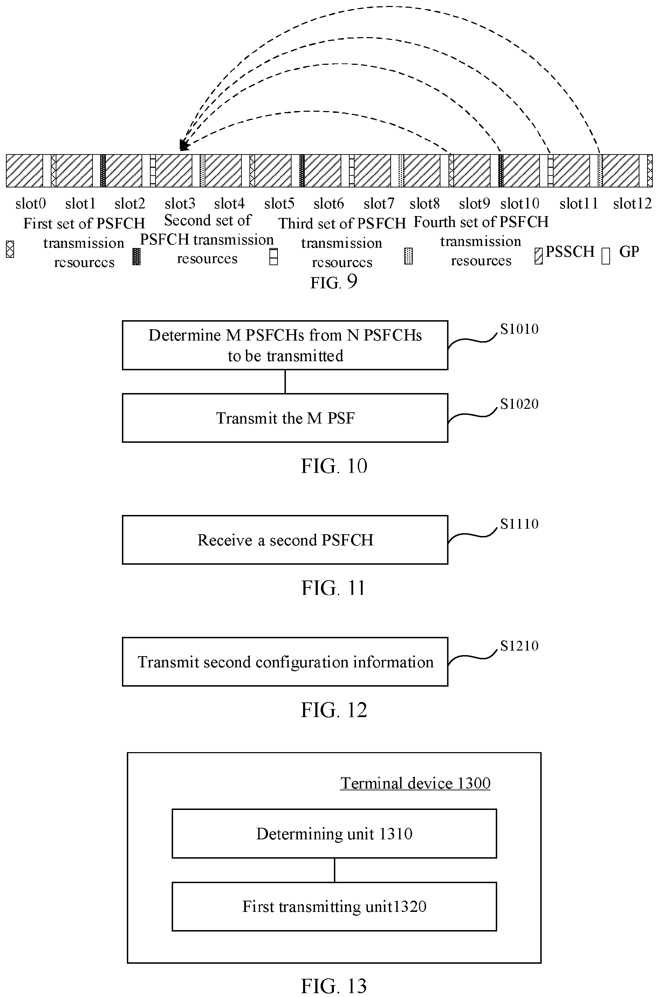

FIG. 9 is an example diagram of a plurality of PSFCH transmission opportunities. As shown in FIG. 9, a period of the PSFCH is four slots. In FIG. 9, four sets of PSFCH transmission resources are configured. Offsets of the four sets of PSFCH transmission resources are zero slots, one slot, two slots, and three slots, respectively. In other words, the first set of PSFCH transmission resource is in slots 0, 4, 8, 12, and the like; the second set of PSFCH transmission resource is in slots 1, 5, 9, and the like; the third set of PSFCH transmission resource is in slots 2, 6, 10, and the like; and the fourth set of PSFCH transmission resource is in slots 3, 7, 11, and the like. In FIG. 9, there are four transmission opportunities for one PSFCH. For example, for a PSSCH in a slot 3, a PSFCH corresponding to the PSSCH has four transmission opportunities, which are in a slot 8, a slot 9, a slot 10, and a slot 11, respectively.

As described above, a terminal device may perform communication transmission within a COT shared by other communications devices. In sidelink communication, for N PSFCHs to be transmitted at a first instant (N is a positive integer), the first instant may be within a shared COT. In this case, how to transmit the N PSFCHs is an urgent problem to be resolved.

FIG. 10 and FIG. 11 are schematic flowcharts of a communication method according to this application, to resolve the foregoing problems. The method shown in FIG. 10 may be executed by a first terminal device. The method shown in FIG. 11 may be executed by a second terminal device.

The method shown in FIG. 10 may include step S1010 and step S1020.

In step S1010, a first terminal device determines M PSFCHs from N PSFCHs to be transmitted.

The N PSFCHs may be PSFCHs to be transmitted at a first instant. In other words, the N PSFCHs may be PSFCHs to be transmitted at a same instant. In an implementation, the first instant may belong to a first slot, that is, the N PSFCHs may be PSFCHs to be transmitted in the first slot.

It should be noted that N may be a positive integer, that is, an integer greater than 0. In other words, the N PSFCHs may include one or more PSFCHs. For example, the N PSFCHs may include a first PSFCH.

The M PSFCHs may be selected from the N PSFCHs. M may be an integer less than or equal to N. That is, the M PSFCHs may be all or some of the N PSFCHs. In addition, M may be an integer greater than or equal to 0.

It should be noted that M may be less than or equal to a maximum number of PSFCHs that the first terminal device can transmit at a same time. The maximum number of PSFCHs that the first terminal device can transmit at a same time may be determined based on terminal device capability information of the first terminal device.

It should be noted that the N PSFCHs described above may be within a first resource block set (RB set) or a first channel.

Optionally, the first channel may be determined in the following manner: the first channel may be determined based on a PRB corresponding to a channel access procedure; or the first channel is determined based on a frequency domain range of a channel access procedure or a listen-before-talk LBT procedure; or a bandwidth of the first channel is 20 MHz.

Optionally, the first resource block set may be within the first channel.

In some embodiments, the method shown in FIG. 10 may further include: acquiring, by the first terminal device, first configuration information. The first configuration information may be used to configure a guard band. A frequency domain start location and a frequency domain end location of the first resource block set may be determined based on the first configuration information, that is, may be determined based on the guard band.

It may be understood that, the N PSFCHs may be PSFCHs in a resource block set. That is, embodiments provided in this application may be implemented at a granularity of a resource block set. For example, the first terminal device has PSFCHs to be transmitted in a plurality of resource block sets at a first instant. For any one resource block set of the plurality of resource block sets, for example, a first resource block set, a quantity of PSFCHs to be transmitted in the first resource block set is N. According to embodiments of this application, the first terminal device may select M PSFCHs from N PSFCHs corresponding to the first resource block set. It should be noted that a quantity (a value of N) of PSFCHs to be transmitted in different resource block sets of the plurality of resource block sets may be the same or different from each other, and a quantity of (a value of M) of PSFCHs selected from PSFCHs to be transmitted in different resource block sets may be the same or different from each other.

The first instant may be within a first shared COT. The first shared COT may be a COT that is shared with another communications device by one or more communications devices after the one or more communications devices perform channel access.

It may be understood that, the first shared COT is a COT that may be shared by the first terminal device. For example, the first terminal device may perform channel listening within the first shared COT by using one of channel access manners of the channel access type 2. If a channel is idle, the first terminal device may transmit the M PSFCHs. Otherwise, the first terminal device cannot transmit the M PSFCHs.

In some embodiments, a second terminal device is a terminal device that initiates the first shared COT. When a receiving terminal for sidelink transmission of the second terminal device includes the first terminal device, and/or a receiving terminal for the N PSFCHs includes the second terminal device, the first terminal device may share the first shared COT.

In some embodiments, an initiator of the first shared COT may be included in a receiving terminal for the N PSFCHs. For example, an initiator of the first shared COT may be the second terminal device or a third terminal device, and a receiving terminal for the N PSFCHs may include the second terminal device or the third terminal device. In some embodiments, an initiator of the first shared COT may not be a receiving terminal for the N PSFCHs. For example, an initiator of the first shared COT may be a network device. Alternatively, an initiator of the first shared COT may be a fourth terminal device, where the fourth terminal device is not a receiving terminal for the N PSFCHs.

The first shared COT may include one or more shared COTs. For example, the first shared COT may include one or more of the following shared COTs: a COT shared by the second terminal device, a COT shared by the third terminal device, or a COT shared by the network device.

In step S 1020, the first terminal device transmits the M PSFCHs.

It may be understood that, the M PSFCHs are PSFCHs actually transmitted by the first terminal device at the first instant. It may be understood that, when M is greater than 0, one or more PSFCHs actually transmitted are selected from the N PSFCHs. When M is equal to 0, no PSFCH actually transmitted is selected from the N PSFCHs.

A receiving terminal for the N PSFCHs may include one or more terminal devices. Accordingly, a receiving terminal for the M PSFCHs may be at least one of one or more terminal devices. For example, a receiving terminal for the N PSFCHs may include the second terminal device and/or the third terminal device. A receiving terminal for the M PSFCHs may include the second terminal device.

FIG. 11 illustrates an example in which the M PSFCHs include a second PSFCH and a receiving terminal for the second PSFCH is the second terminal device. The method shown in FIG. 11 may include step S1110.

In step S1110, a second terminal device receives a second PSFCH transmitted by the first terminal device.

It should be noted that, a receiving terminal for sidelink transmission of the second terminal device may include the first terminal device, and/or a receiving terminal for the N PSFCHs may include the second terminal device. The second terminal device may be a terminal device that initiates the first shared COT.

For a scenario where N PSFCHs are to be transmitted at a first instant and the first instant is within a first shared COT, the first terminal device may determine M PSFCHs from the N PSFCHs to be transmitted, and transmit the determined M PSFCHs at the first instant according to embodiments of this application. Accordingly, a receiving terminal for the M PSFCHs (including the second terminal device) may receive the PSFCH. Therefore, PSFCH transmission can be implemented in the above scenario according to the embodiments of this application.

For a manner of determining the M PSFCHs, this application provides the following three implementations. It may be understood that the following implementations may be separately implemented, or may be implemented in a combined manner.

Manner 1: The M PSFCHs are determined based on a priority of the PSFCH.

In an implementation, the N PSFCHs may include a first PSFCH. Whether the first PSFCH belongs to the M PSFCHs may be determined based on a priority of the first PSFCH.

A priority of a PSFCH may be used to indicate a priority status of the PSFCH in a specific aspect. For example, the priority may include a CAPC class and/or sidelink priority.

The following description is provided using an example in which a samller value of the priority indicates a higher class of the priority (that is, more preferential) of the first PSFCH. It may be understood that the following embodiments may also be applicable to a case in which a larger value of the priority indicates a higher class of the priority of the first PSFCH, which is not described in this application.

In some embodiments, when the priority of the first PSFCH is higher than or equal to a first class, the first PSFCH may belong to the M PSFCHs. For example, in a case in which a value of the priority of the first PSFCH is less than or equal to a first value, the first PSFCH may belong to the M PSFCHs. That is, a PSFCH transmitted within the first shared COT may be a PSFCH whose priority is less than or equal to the first value in the N PSFCHs.

A manner of determining the first value is not limited in this application. For example, the first value may be determined based on one or more of the following information: indication information used for indicating the first shared COT, a value of a CAPC used when the terminal device that initiates the first shared COT performs channel access, network configuration information, or pre-configuration information.

The indication information used for indicating the first shared COT may include one or more pieces of COT sharing information related to the first shared COT. In other words, the first terminal device may determine the first value based on the one or more pieces of COT sharing information. A communications device may implement COT sharing based on indication of the COT sharing information. For example, the COT sharing information may include information such as remaining COT duration information and/or a COT sharing identifier.

The indication information used for indicating the first shared COT may be transmitted by one or more initiators of the first shared COT. In an example in which the initiator of the first shared COT includes the second terminal device, the indication information used for indicating the first shared COT may include COT sharing information transmitted by the second terminal device. In an example in which the first shared COT includes shared COTs initiated by a plurality of initiators, the indication information used for indicating the first shared COT may include a plurality of pieces of COT sharing information respectively transmitted by the plurality of initiators.

In an implementation, the initiator of the first shared COT may also transmit a PSSCH while transmitting the indication information of the first shared COT, and the first value may be determined based on a value of a priority (for example, a CAPC class or a sidelink priority) of the PSSCH. In an example in which the initiator of the first shared COT includes the second terminal device, the second terminal device may also transmit a PSSCH while transmitting COT sharing information, and the first value may be determined based on a value of a priority of the PSSCH.

It may be learned from the principle of COT sharing described above that, COT may be shared based on a CAPC class of a communications device that initiates the shared COT. In view of this principle, the first value may be determined based on a value of a CAPC used when a communications device (for example, a terminal device) that initiates the first shared COT performs channel access. For example, the first value may be a value of a CAPC used when a terminal device that initiates the first shared COT performs channel access. In this case, when a value of a priority of the first PSFCH is less than or equal to the value of the CAPC used when the terminal device that initiates the first shared COT performs channel access, the first PSFCH may belong to the M PSFCHs.

It should be noted that in a case in which the first value is determined based on network configuration information, the network device may transmit related network configuration information. FIG. 12 is a schematic flowchart of a communication method according to this application. The method shown in FIG. 12 may be executed by the network device. The method shown in FIG. 12 may include step S1210. In step S1210, the network device may transmit second configuration information, where the second configuration information may be used to determine the first value.

In some embodiments, the information for determining the first value described above may include the first value. That is, the first value may be directly acquired based on the information for determining the first value.

In some other embodiments, the information for determining the first value may include a first threshold, or the information for determining the first value may be associated with a first threshold. The first value may be determined based on the first threshold. In an implementation, the first value may be equal to a value for the first threshold. In another implementation, the first value may be determined by calculating the first threshold or performing mapping on the first threshold.

In some embodiments, in a case in which the first shared COT includes a plurality of shared COTs shared by a plurality of initiators, the first value may be determined based on a plurality of pieces of indication information corresponding to the plurality of shared COTs, that is, the indication information of the first shared COT may include the plurality of pieces of indication information corresponding to the plurality of shared COTs. For example, the plurality of pieces of indication information corresponding to the plurality of shared COTs may include a plurality of pieces of COT sharing information. In this case, the first value may be a maximum value or a minimum value of priorities corresponding to the plurality of pieces of COT sharing information.

As described above, the first value is compared with the priority of the first PSFCH, to determine whether the first PSFCH belongs to the M PSFCHs. The method for determining the first value is described above, and a method for determining the priority of the first PSFCH is described below in detail.

The priority of the first PSFCH may be related to a transmission opportunity. For example, the first instant may correspond to a first transmission opportunity of the first PSFCH, and the priority of the first PSFCH may be determined based on the first transmission opportunity.

In an implementation, a value of the priority of the first PSFCH may decrease as an index value (hereinafter represented by k, k is an integer greater than or equal to 1) of a transmission opportunity corresponding to the first PSFCH increases. In other words, a class of the priority of the PSFCH may increase as a transmission opportunity of the PSFCH increases, or a value of the priority of the PSFCH may decrease as the transmission opportunity of the PSFCH increases. For example, a first transmission opportunity corresponding to the first PSFCH at the first instant is a $k^{th}$ transmission opportunity of the first PSFCH. If there is a $(k-1)^{th}$ transmission opportunity for the first PSFCH, a value of the priority of the first PSFCH at the $(k-1)^{th}$ transmission opportunity may be greater than or equal to a value of the priority of the first PSFCH at a $k^{th}$ transmission opportunity.

In another implementation, a value of the priority of the first PSFCH may increase as an index value k of a transmission opportunity corresponding to the first PSFCH increases. In other words, a class of the priority of PSFCH may decrease as a transmission opportunity of the PSFCH increases, or a value of the priority of the PSFCH may increase as a transmission opportunity of the PSFCH increases. For example, a first transmission opportunity corresponding to the first PSFCH at the first instant is a $k^{th}$ transmission opportunity of the first PSFCH. If there is a $(k-1)^{th}$ transmission opportunity for the first PSFCH, a value of the priority of the first PSFCH at the $(k-1)^{th}$ transmission opportunity may be less than or equal to a value of the priority of the first PSFCH at a $k^{th}$ transmission opportunity.

In an implementation, a value of the priority of the first PSFCH may be greater than or equal to a minimum value of the priority. The minimum value may be, for example, 1.

In some embodiments, a value $p_k$ of the priority of the first PSFCH may meet: $p_k = max(p_1 - (k-1),1)$, where max indicates calculating a maximum value, $p_1$ indicates a value of a priority of the first PSFCH at a $1^{st}$ transmission opportunity, $p_k$ indicates a value of a priority of the first PSFCH at a $k^{th}$ transmission opportunity, k indicates the $k^{th}$ transmission opportunity (that is, an index value of the transmission opportunity) of the first PSFCH, and k is an integer greater than or equal to 1. For example, a value of the priority of the first PSFCH at a $1^{st}$ transmission opportunity may be 3. A value of the priority of the first PSFCH at a $2^{nd}$ transmission opportunity may be 2. A value of the priority of the first PSFCH at a $3^{rd}$ transmission opportunity may be 1. A value of the priority of the first PSFCH at a $4^{th}$ transmission opportunity may be 1. A value of the priority does not exceed a minimum value 1 of the priority.

In an implementation, the priority may include a CAPC class. When the priority includes a CAPC class, the priority of the first PSFCH is determined according to: pre-defined information in a protocol; pre-configuration information; network configuration information; or a channel access priority of a PSSCH corresponding to the first PSFCH. For example, a CAPC class corresponding to the first PSFCH may be determined based on a CAPC class corresponding to a PSSCH associated with the first PSFCH. Further, a CAPC class corresponding to a PSSCH may be determined based on quality of service (quality of service, QoS) or a sidelink priority of sidelink data to be transmitted by the PSSCH.

It may be understood that when the priority of the first PSFCH includes a CAPC class, the manner described above may be combined with the first transmission opportunity, to determine the priority of the first PSFCH. In an implementation, a value $p_1$ of a CAPC corresponding to the first PSFCH at the 1st transmission opportunity may be determined based on a channel access priority of a PSSCH corresponding to the first PSFCH, and a value of a CAPC corresponding to the first PSFCH at a 2nd transmission opportunity and a subsequent transmission opportunity may meet: $p_k = \max(p_1 - (k-1),1)$.

In an implementation, the priority may include a sidelink priority. When the priority includes a sidelink priority, the priority of the first PSFCH is determined according to: pre-defined information in a protocol; pre-configuration information; network configuration information; or a channel access priority of a PSSCH corresponding to the first PSFCH. For example, a sidelink priority of the first PSFCH may be determined based on a sidelink priority of a PSSCH associated with the first PSFCH. Further, a sidelink priority of a PSSCH may be determined based on priority information in sidelink control information (sidelink control information, SCI) that schedules the PSSCH.

It may be understood that when the priority of the first PSFCH includes a sidelink priority, the manner described above may be combined with the first transmission opportunity, to determine the priority of the first PSFCH. In an implementation, a value $p_1$ of a sidelink priority of the first PSFCH at the 1st transmission opportunity may be determined based on a sidelink priority of a PSSCH corresponding to the first PSFCH, and a value of a sidelink priority of the first PSFCH at a 2nd transmission opportunity and a subsequent transmission opportunity may meet:

$$p_k = \max(p_1 - (k-1), 1).$$

It should be noted that in a case in which the priority of the first PSFCH is determined based on network configuration information, the network device may transmit related network configuration information. For example, the network device may transmit third configuration information, where the third configuration information may be used to determine the priority of the first PSFCH (that is, a CAPC class of the first PSFCH).

Manner 2: The M PSFCHs are determined based on a receiving terminal for the PSFCH.

In an implementation, a receiving terminal for the M PSFCHs may be a terminal device that initiates the first shared COT.

In some embodiments, the terminal device that initiates the first shared COT may include one terminal device. For example, the terminal device that initiates the first shared COT may be a second terminal device. In this case, the M PSFCHs may all be PSFCHs transmitted to the second terminal device. That is, in this case, the first terminal device can transmit the PSFCHs to the second terminal device by using only a COT shared by the second terminal device.

In some embodiments, the terminal device that initiates the first shared COT may include a plurality of terminal devices. For example, the terminal device that initiates the first shared COT may include a second terminal device and a third terminal device. In this case, the first terminal device can transmit the PSFCHs to the plurality of terminal devices by using only COTs shared by the plurality of terminal devices. In this case, the M PSFCHs transmitted by the first terminal device include a PSFCH transmitted to the second terminal device and a PSFCH transmitted to the third terminal device.

Manner 3: The M PSFCHs are all of the N PSFCHs, that is, M = N.

In other words, the first terminal device transmits all the PSFCHs to be transmitted. Based on this manner, all the PSFCHs to be transmitted may be directly transmitted without considering any conditions. For example, PSFCH may be transmitted without considering the priority, the receiving end, and other principles mentioned above. It can be learned that this manner is easy to be implemented.

As described above, the above three implementations may be combined, which is described below.

In some embodiments, Manner 1 and Manner 3 may be combined. For example, the first terminal device may determine, based on priorities of the N PSFCHs, whether M is equal to N, that is, determining whether to transmit all of the N PSFCHs. In some embodiments, the N PSFCHs include the first PSFCH. If a value of the priority of the first PSFCH is less than or equal to the first value, M may be equal to N, that is, the first terminal device may transmit all of the N PSFCHs. In other words, when a value of a priority of at least one PSFCH of the N PSFCHs is less than or equal to the first value (or a class of the priority is higher than or equal to a first class), the first terminal device may transmit all of the N PSFCHs.

In some embodiments, Manner 1 and Manner 2 may be combined. The first terminal device may determine the M PSFCHs based on priorities of the N PSFCHs and a receiving end corresponding to the N PSFCHs. In some embodiments, the second terminal device transmits information about the first shared COT to the first terminal device. The first terminal device determines, by using Manner 2, that a receiving terminal for N1 PSFCHs in the N PSFCHs is the second terminal device. Further, priorities of the N1 PSFCHs are compared with the first value, to select M PSFCHs whose values of priorities are less than or equal to the first value from the N1 PSFCHs by using Manner 1.

The method for determining the M PSFCHs is described above, and a method for transmitting the M PSFCHs is described below in detail.

In some embodiments, the first terminal device may perform a channel access procedure before transmitting the M PSFCHs. In a case in which the channel access procedure is successful (that is, a channel is idle), the first terminal device may transmit the M PSFCHs.

In an implementation, the method shown in FIG. 10 may further include: performing, by the first terminal device, a first type of channel access procedure within the first shared COT.

The first type of channel access procedure may include a channel access procedure type 2. That is, the first type of channel access procedure may include type 2A channel access procedure, type 2B channel access procedure, or type 2C channel access procedure.

A type of the first type of channel access procedure may be determined based on one or more of the following information: a sidelink subcarrier spacing, a time interval between the first instant and an end instant of a previous sidelink transmission, indication information received by the first terminal device, or whether sidelink transmission is detected by the first terminal before the first instant in a first slot. The first slot may be a slot where the first instant is located. The following describes the information used to determine the type of the first type of channel access procedure.

In a case in which the type of the first type of channel access procedure is determined based on a sidelink subcarrier spacing (sidelink subcarrier spacing, SL SCS), and the first slot includes sidelink transmission (for example, includes a PSSCH and/or a PSCCH), the first terminal device may perform listening within only a GP symbol in the first slot, to determine whether a channel is idle. A length of the GP symbol is related to a size of the sidelink subcarrier spacing. Therefore, the type of the first type of channel access procedure may be determined based on the size of the SL SCS. That is, the length of the GP symbol may be determined based on the SL SCS, and listening duration for the first type of channel access procedure may be determined based on the length of the GP symbol, thereby determining the type of the first type of channel access procedure.

In a case in which the type of the first type of channel access procedure is determined based on the time interval between the first instant and the end instant of the previous sidelink transmission, if the time interval is greater than or equal to 25 microseconds, the type of the first type of channel access procedure may be the type 2A channel access procedure; and/or if the time interval is equal to 16 microseconds, or the time interval is greater than or equal to 16 microseconds and less than 25 microseconds, the type of the first type of channel access procedure may be the type 2B channel access procedure; and/or if the time interval is less than or equal to 16 microseconds, the type of the first type of channel access procedure is the type 2C channel access procedure.

It should be noted that the previous sidelink transmission may be performed by any terminal device. For example, the previous sidelink transmission may be performed by the first terminal device. Alternatively, the previous sidelink transmission may be performed by another terminal device different from the first terminal device.

In an implementation, the indication information received by the first terminal device may be transmitted by a terminal that initiates the first shared COT. The terminal that initiates the first shared COT may include, for example, the second terminal device, that is, the indication information received by the first terminal device may be transmitted by the second terminal device.

In an implementation, the indication information received by the first terminal device may be included in the indication information used for indicating the first shared COT described above. In an example in which the indication information used for indicating the first shared COT includes COT sharing information, the COT sharing information may include indication information of the type of the first type of channel access procedure. Alternatively, the initiator of the first shared COT may indicate the type of the first type of channel access procedure while transmitting the COT sharing information.

In a case in which no sidelink transmission is detected before the first instant in the first slot, the type of the first type of channel access procedure may be the channel access type 2A. As shown in FIG. 6, in a case that both PSSCH transmission and PSFCH transmission are performed within the first slot, the PSSCH transmission is performed before the PSFCH transmission. Therefore, the first terminal device may detect whether PSCCH transmission or PSSCH transmission is performed before the M PSFCHs in the first slot. In a case that no PSCCH transmission or PSSCH transmission is performed, it may be indicated that an interval between transmission of the M PSFCHs and the previous sidelink transmission is greater than 25 microseconds, and channel access needs to be performed by using the channel access type 2A.

In addition to the first type of channel access procedure described above, the first terminal device may perform the second type of channel access procedure. A scenario where the first terminal device performs the second type of channel access procedure may include but not limited to the following three scenarios. Scenario 1: M is less than N, that is, the M PSFCHs transmitted by the first terminal device are not all of the N PSFCHs, and there are still remaining PSFCHs to be transmitted. Scenario 2: The first terminal device performs the first type of channel access procedure, but no channel is idle. Scenario 3: The first instant is not within the first shared COT.

For ease of description, PSFCHs transmitted based on the second type of channel access procedure are called Q PSFCHs, where Q is an integer greater than or equal to 0. As described above, in different scenarios, the Q PSFCHs may be remaining PSFCHs other than the M PSFCHs in the N PSFCHs, or the Q PSFCHs may be the N PSFCHs.

In some embodiments, in a case in which it is determined, based on the second type of channel access procedure, that a channel is idle (or the second type of channel access procedure is successful), the Q PSFCHs may be transmitted. In a case that no channel is idle, the Q PSFCHs cannot be transmitted. For example, in a case in which it is determined, based on the second type of channel access procedure, that a channel is idle, for Scenario 1, the first terminal device may transmit remaining PSFCHs other than the M PSFCHs in the N PSFCHs. Alternatively, in a case in which it is determined, based on the second type of channel access procedure, that a channel is idle, for Scenario 2 or Scenario 3, the first terminal may transmit all of the N PSFCHs.

In some embodiments, the second type of channel access procedure may include the channel access procedure type 1 or the type 2A channel access procedure.

In a case in which the second type of channel access procedure is the channel access procedure type 1, a channel access priority class (channel access priority class, CAPC) is determined according to one or more of: a highest class or a lowest class in CAPC classes corresponding to the Q PSFCHs; a highest priority or a lowest priority in sidelink priorities of the Q PSFCHs; or pre-configuration information or network configuration information. In an implementation, CAPC classes of the Q PSFCHs may be configured by using the pre-configuration information or the network configuration information, for example, the CAPC classes of the Q PSFCHs may be configured as the highest class or the lowest class of the CAPC classes of the Q PSFCHs.

It should be noted that if a channel access priority of the Q PSFCHs is determined based on network configuration information, the network device may transmit related network configuration information. For example, the network device may transmit fourth configuration information, where the fourth configuration information may be used to determine the CAPC classes of the Q PSFCHs.

It should be noted that in a case in which M is greater than a maximum number of PSFCHs that the first terminal device can transmit at a same time, the first terminal device may select, based on the maximum number of PSFCHs that the first terminal device can transmit at a same time, K PSFCHs to be transmitted from the M PSFCHs, where K may be an integer greater than or equal to 0. K may be less than or equal to the maximum number of PSFCHs that the first terminal device can transmit at a same time.

The foregoing describes in detail the method embodiments of this application with reference to FIG. 1 to FIG. 12. The following describes in detail apparatus embodiments of this application with reference to FIG. 13 to FIG. 16. It should be understood that the description of the method embodiments corresponds to the description of the apparatus embodiments, and therefore, for parts that are not described in detail, reference may be made to the foregoing method embodiments.

FIG. 13 is a schematic structural diagram of a terminal device 1300 according to an embodiment of this application. The terminal device 1300 is the first terminal device, and the terminal device 1300 includes a determining unit 1310 and a first transmitting unit 1320.

The determining unit 1310 is configured to determine M PSFCHs from N physical sidelink feedback channels PSFCHs to be transmitted; and the first transmitting unit 1320 is configured to transmit the M PSFCHs. The N PSFCHs are PSFCHs to be transmitted at a first instant, the first instant is within a first shared channel occupancy time COT, N is a positive integer, and M is an integer less than or equal to N.

Optionally, a receiving terminal for the M PSFCHs is a terminal device that initiates the first shared COT.

Optionally, the N PSFCHs include a first PSFCH, and whether the first PSFCH belongs to the M PSFCHs is determined based on a priority of the first PSFCH.

Optionally, in a case in which a value of the priority of the first PSFCH is less than or equal to a first value, the first PSFCH belongs to the M PSFCHs.

Optionally, in a case in which a value of the priority of the first PSFCH is less than or equal to a first value, M is equal to N.

Optionally, the first value is determined based on one or more of the following information: indication information used for indicating the first shared COT, a value of a channel access priority used when the terminal device that initiates the first shared COT performs channel access, network configuration information, or pre-configuration information.

Optionally, the first instant corresponds to a first transmission opportunity of the first PSFCH, and the priority corresponding to the first PSFCH is determined based on the first transmission opportunity.

Optionally, a value of the priority of the first PSFCH decreases as an index value of a transmission opportunity corresponding to the first PSFCH increases.

Optionally, a value of the priority of the first PSFCH is greater than or equal to a minimum value of the priority.

Optionally, a value $p_k$ of the priority of the first PSFCH meets: $p_k = \max(p_1 - (k-1), 1)$, where max indicates calculating a maximum value, $p_1$ indicates a value of a priority of the first PSFCH at a $1^{st}$ transmission opportunity, $p_k$ indicates a value of a priority of the first PSFCH at a $k^{th}$ transmission opportunity, k indicates the $k^{th}$ transmission opportunity of the first PSFCH, and k is an integer greater than 1.

Optionally, the priority includes a channel access priority CAPC class or a sidelink priority.

Optionally, when the priority includes a CAPC class, the priority of the first PSFCH is determined according to: pre-defined information in a protocol; pre-configuration information; network configuration information; or a channel access priority of a physical sidelink shared channel PSSCH corresponding to the first PSFCH.

Optionally, a receiving terminal for sidelink transmission of a second terminal device includes the first terminal device, and/or a receiving terminal for the N PSFCHs includes the second terminal device. The second terminal device is a terminal device that initiates the first shared COT.

Optionally, the terminal device 1300 further includes: a first channel access unit, configured to perform a first type of channel access procedure within the first shared COT, where a type of the first type of channel access procedure is determined based on one or more of the following information: a sidelink subcarrier spacing, a time interval between the first instant and an end instant of a previous sidelink transmission, indication information received by the first terminal device, or whether sidelink transmission is detected by the first terminal device before the first instant in a first slot. The first slot is a slot where the first instant is located.

Optionally, the first type of channel access procedure includes type 2A channel access procedure, type 2B channel access procedure, or type 2C channel access procedure.

Optionally, in a case in which the type of the first type of channel access procedure is determined based on the time interval between the first instant and the end instant of the previous sidelink transmission, if the time interval is greater than or equal to 25 microseconds, the type of the first type of channel access procedure is the type 2A channel access procedure; and/or if the time interval is equal to 16 microseconds, or the time interval is greater than or equal to 16 microseconds and less than 25 microseconds, the type of the first type of channel access procedure is the type 2B channel access procedure; and/or if the time interval is less than or equal to 16 microseconds, the type of the first type of channel access procedure is the type 2C channel access procedure.

Optionally, in a case in which the type of the first type of channel access procedure is determined based on the indication information, the indication information is included in information used for indicating the first shared COT.

Optionally, in a case in which no sidelink transmission is detected before the first instant in the first slot, the type of the first type of channel access procedure is a channel access type 2A.

Optionally, M is less than or equal to a maximum number of PSFCHs that the first terminal device can transmit at a same time.

Optionally, the N PSFCHs are within a first resource block set or a first channel.

Optionally, the first channel is determined based on a physical resource block PRB corresponding to a channel access procedure, or the first channel is determined based on a frequency domain range of a channel access procedure or a listen-before-talk LBT procedure, or a bandwidth of the first channel is 20 MHz.

Optionally, the first resource block set is within the first channel.

Optionally, the terminal device 1300 further includes: an acquisition unit, configured to acquire first configuration information, where the first configuration information is used to configure a guard band, and a frequency domain start location and a frequency domain end location of the first resource block set are determined based on the first configuration information.

Optionally, the terminal device 1300 further includes: a second channel access unit, configured to: in a case in which M is less than N, perform a second type of channel access procedure. If a channel is idle, the first terminal device transmits remaining PSFCHs other than the M PSFCHs in the N PSFCHs at the first instant.

Optionally, the type of the second type of channel access procedure includes the channel access procedure type 1 or the type 2A channel access procedure.

Optionally, in a case in which the type of the second type of channel access procedure is the channel access procedure type 1, a channel access priority is determined according to one or more of: a highest class or a lowest class in CAPC classes corresponding to the remaining PSFCHs; a highest priority or a lowest priority in sidelink priorities of the remaining PSFCHs; or pre-configuration information or network configuration information.

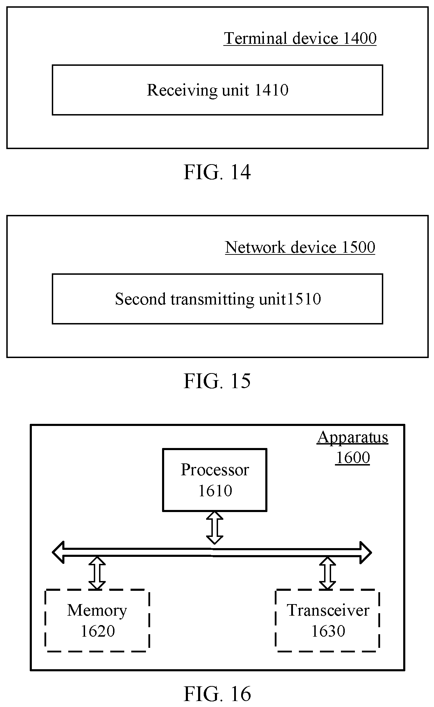

FIG. 14 is a schematic structural diagram of another terminal device 1400 according to this application. The communications device 1400 is a second terminal device. The terminal device 1400 includes a receiving unit 1410.

The receiving unit 1410 is configured to receive a second physical sidelink feedback channel PSFCH. The second PSFCH belongs to M PSFCHs, the M PSFCHs are determined from N PSFCHs to be transmitted and transmitted by a first terminal device at a first instant, and the first instant is within a first shared channel occupancy time COT, where N is a positive integer, and M is an integer less than or equal to N.

Optionally, a receiving terminal for the M PSFCHs is a terminal device that initiates the first shared COT.

Optionally, the N PSFCHs include a first PSFCH, and whether the first PSFCH belongs to the M PSFCHs is determined based on a priority of the first PSFCH.

Optionally, in a case in which a value of the priority of the first PSFCH is less than or equal to a first value, the first PSFCH belongs to the M PSFCHs.

Optionally, in a case in which a value of the priority of the first PSFCH is less than or equal to a first value, M is equal to N.

Optionally, the first value is determined based on one or more of the following information: indication information used for indicating the first shared COT, a value of a channel access priority used when the terminal device that initiates the first shared COT performs channel access, network configuration information, or pre-configuration information.

Optionally, the first instant corresponds to a first transmission opportunity of the first PSFCH, and the priority of the first PSFCH is determined based on the first transmission opportunity.

Optionally, a value of the priority of the first PSFCH decreases as an index value of a transmission opportunity corresponding to the first PSFCH increases.

Optionally, a value of the priority of the first PSFCH is greater than or equal to a minimum value of the priority.

Optionally, a value $p_k$ of the priority of the first PSFCH meets: $p_k = \max(p_1 - (k-1), 1)$, where max indicates calculating a maximum value, $p_1$ indicates a value of a priority of the first PSFCH at a $1^{st}$ transmission opportunity, $p_k$ indicates a value of a priority of the first PSFCH at a $k^{th}$ transmission opportunity, k indicates the $k^{th}$ transmission opportunity of the first PSFCH, and k is an integer greater than 1.

Optionally, the priority includes a channel access priority CAPC class or a sidelink priority.

Optionally, when the priority includes a CAPC class, the priority of the first PSFCH is determined according to: pre-defined information in a protocol; pre-configuration information; network configuration information; or a channel access priority of a physical sidelink shared channel PSSCH corresponding to the first PSFCH.

Optionally, a receiving terminal for sidelink transmission of a second terminal device includes the first terminal device, and/or a receiving terminal for the N PSFCHs includes the second terminal device. The second terminal device is a terminal device that initiates the first shared COT.

Optionally, M is less than or equal to a maximum number of PSFCHs that the first terminal device can transmit at a same time.

Optionally, the N PSFCHs are within a first resource block set or a first channel.

Optionally, the first channel is determined based on a physical resource block PRB corresponding to a channel access procedure, or the first channel is determined based on a frequency domain range of a channel access procedure or a listen-before-talk LBT procedure, or a bandwidth of the first channel is 20 MHz.

Optionally, the first resource block set is within the first channel.

FIG. 15 is a schematic structural diagram of a network device 1500 according to this application. The network device 1500 may include a second transmitting unit 1510.

The second transmitting unit 1510 is configured to transmit second configuration information. The second configuration information is used to determine a first value, a first class is used to determine whether a first PSFCH in N PSFCHs to be transmitted at a first instant belongs to M PSFCHs, the M PSFCHs are PSFCHs transmitted at the first instant. In a case in which a priority of the first PSFCH is less than or equal to the first value, the first PSFCH belongs to the M PSFCHs, and the first instant is within a first shared COT, where N is a positive integer, and M is an integer less than or equal to N.

FIG. 16 is a schematic structural diagram of a communications apparatus according to an embodiment of this application. The dashed lines in FIG. 16 indicate that the unit or module is optional. The apparatus 1600 may be configured to implement the method described in the foregoing method embodiments. The apparatus 1600 may be a chip, a terminal device, or a network device.

The apparatus 1600 may include one or more processors 1610. The processor 1610 may allow the apparatus 1600 to implement the method described in the foregoing method embodiments. The processor 1610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program that may be executed by the processor 1610 to cause the processor 1610 to perform the method described in the foregoing method embodiments. The memory 1620 may be independent of the processor 1610 or may be integrated into the processor 1610.

The apparatus 1600 may further include a transceiver 1630. The processor 1610 may communicate with another device or chip through a transceiver 1630. For example, the processor 1610 may transmit data to and receive data from the another device or chip through the transceiver 1630.

An embodiment of this application further provides a computer-readable storage medium for storing a program. The computer-readable storage medium may be applied to the terminal or the network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, predefined may indicate being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objective of the solutions of the embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    determining, by a first terminal device, M PSFCHs from N physical sidelink feedback channels PSFCHs to be transmitted; and
    transmitting, by the first terminal device, the M PSFCHs,
    wherein the N PSFCHs are PSFCHs to be transmitted at a first instant, the first instant is within a first shared channel occupancy time COT, N is a positive integer, and M is an integer less than or equal to N.

2.  The method according to claim 1, wherein a receiving terminal for the M PSFCHs is a terminal device that initiates the first shared COT.

3.  The method according to claim 1 or 2, wherein the N PSFCHs comprise a first PSFCH, and whether the first PSFCH belongs to the M PSFCHs is determined based on a priority of the first PSFCH.

4.  The method according to claim 3, wherein in a case in which a value of the priority of the first PSFCH is less than or equal to a first value, the first PSFCH belongs to the M PSFCHs.

5.  The method according to claim 3, wherein in a case in which a value of the priority of the first PSFCH is less than or equal to a first value, the M is equal to the N.

6.  The method according to claim 4 or 5, wherein the first value is determined based on one or more of following information: indication information used for indicating the first shared COT, a value of a channel access priority used when the terminal device that initiates the first shared COT performs channel access, network configuration information, or pre-configuration information.

7.  The method according to any one of claims 3 to 6, wherein the first instant corresponds to a first transmission opportunity of the first PSFCH, and the priority of the first PSFCH is determined based on the first transmission opportunity.

8.  The method according to claim 7, wherein a value of the priority of the first PSFCH decreases as an index value of a transmission opportunity corresponding to the first PSFCH increases.

9.  The method according to claim 7 or 8, wherein a value of the priority of the first PSFCH is greater than or equal to a minimum value of the priority.

10. The method according to any one of claims 7 to 9, wherein a value $p_k$ of the priority of the first PSFCH meets: $p_k = \max(p_1 - (k-1), 1)$, wherein max indicates calculating a maximum value, $p_1$ indicates a value of a priority of the first PSFCH at a $1^{st}$ transmission opportunity, $p_k$ indicates a value of a priority of the first PSFCH at a $k^{th}$ transmission opportunity, k indicates the $k^{th}$ transmission opportunity of the first PSFCH, and k is an integer greater than 1.

11. The method according to any one of claims 3 to 10, wherein the priority comprises a channel access priority class CAPC or a sidelink priority.

12. The method according to claim 11, wherein when the priority comprises a CAPC class, the priority of the first PSFCH is determined according to:

    pre-defined information in a protocol;
    pre-configuration information;
    network configuration information; or
    a channel access priority of a physical sidelink shared channel PSSCH corresponding to the first PSFCH.

13. The method according to any one of claims 1 to 12, wherein
    a receiving terminal for sidelink transmission of a second terminal device comprises the first terminal device, and/or a receiving terminal for the N PSFCHs comprises the second terminal device, wherein the second terminal device is a terminal device that initiates the first shared COT.

14. The method according to any one of claims 1 to 13, further comprising:

> performing, by the first terminal device, a first type of channel access procedure within the first shared COT,
> wherein a type of the first type of channel access procedure is determined based on one or more of following information: a sidelink subcarrier spacing, a time interval between the first instant and an end instant of a previous sidelink transmission, indication information received by the first terminal device, or whether sidelink transmission is detected by the first terminal before the first instant in a first slot, wherein the first slot is a slot where the first instant is located.

15. The method according to claim 14, wherein the first type of channel access procedure comprises type 2A channel access procedure, type 2B channel access procedure, or type 2C channel access procedure.

16. The method according to claim 14 or 15, wherein in a case in which the type of the first type of channel access procedure is determined based on the time interval between the first instant and the end instant of the previous sidelink transmission,

> if the time interval is greater than or equal to 25 microseconds, the first type of channel access procedure is type 2A channel access procedure; and/or
> if the time interval is equal to 16 microseconds, or the time interval is greater than or equal to 16 microseconds and less than 25 microseconds, the first type of channel access procedure is type 2B channel access procedure; and/or
> if the time interval is less than or equal to 16 microseconds, the first type of channel access procedure is type 2C channel access procedure.

17. The method according to claim 14 or 15, wherein in a case in which the type of the first type of channel access procedure is determined based on the indication information, the indication information is comprised in information used for indicating the first shared COT.

18. The method according to claim 14 or 15, wherein in a case in which no sidelink transmission is detected before the first instant in the first slot, the first type of channel access procedure is a channel access type 2A.

19. The method according to any one of claims 1 to 18, wherein the M is less than or equal to a maximum number of PSFCHs that the first terminal device transmits at a same time.

20. The method according to any one of claims 1 to 19, wherein the N PSFCHs are within a first resource block set or a first channel.

21. The method according to claim 20, wherein the first channel is determined based on a physical resource block PRB corresponding to a channel access procedure, or the first channel is determined based on a frequency domain range of a channel access procedure or a listen-before-talk LBT procedure, or a bandwidth of the first channel is 20 MHz.

22. The method according to claim 20 or 21, wherein the first resource block set is within the first channel.

23. The method according to any one of claims 20 to 22, further comprising:
acquiring, by the first terminal device, first configuration information, wherein the first configuration information is used to configure a guard band, and a frequency domain start location and a frequency domain end location of the first resource block set are determined based on the first configuration information.

24. The method according to any one of claims 1 to 23, further comprising:

> in a case in which the M is less than the N, performing, by the first terminal device, a second type of channel access procedure; and
> if a channel is idle, transmitting, by the first terminal device, remaining PSFCHs other than the M PSFCHs among the N PSFCHs at the first instant.

25. The method according to claim 24, wherein a type of the second type of channel access procedure comprises a channel access procedure type 1 or type 2A channel access procedure.

26. The method according to claim 25, wherein in a case in which the type of the second type of channel access procedure is the channel access procedure type 1, a channel access priority is determined according to one and more of:

> a highest class or a lowest class in CAPC classes corresponding to the remaining PSFCHs;
> a highest priority or a lowest priority in sidelink priorities corresponding to the remaining PSFCHs; or

pre-configuration information or network configuration information.

27. A communication method, comprising:

receiving, by a second terminal device, a second physical sidelink feedback channel PSFCH, wherein the second PSFCH belongs to M PSFCHs, the M PSFCHs are determined from N PSFCHs to be transmitted and transmitted by a first terminal device at a first instant, and the first instant is within a first shared channel occupancy time COT, wherein N is a positive integer, and M is an integer less than or equal to N.

28. The method according to claim 27, wherein a receiving terminal for the M PSFCHs is a terminal device that initiates the first shared COT.

29. The method according to claim 27 or 28, wherein the N PSFCHs comprise a first PSFCH, and whether the first PSFCH belongs to the M PSFCHs is determined based on a priority of the first PSFCH.

30. The method according to claim 29, wherein in a case in which a value of the priority of the first PSFCH is less than or equal to a first value, the first PSFCH belongs to the M PSFCHs.

31. The method according to claim 29, wherein in a case in which a value of the priority of the first PSFCH is less than or equal to a first value, the M is equal to the N.

32. The method according to claim 30 or 31, wherein the first value is determined based on one or more of following information: indication information used for indicating the first shared COT, a value of a channel access priority used when the terminal device that initiates the first shared COT performs channel access, network configuration information, or pre-configuration information.

33. The method according to any one of claims 29 to 32, wherein the first instant corresponds to a first transmission opportunity of the first PSFCH, and the priority of the first PSFCH is determined based on the first transmission opportunity.

34. The method according to claim 33, wherein a value of the priority of the first PSFCH decreases as an index value of a transmission opportunity corresponding to the first PSFCH increases.

35. The method according to claim 33 or 34, wherein a value of the priority of the first PSFCH is greater than or equal to a minimum value of the priority.

36. The method according to any one of claims 33 to 35, wherein a value $p_k$ of the priority of the first PSFCH meets: $p_k = \max(p_1 - (k-1), 1)$, wherein max indicates calculating a maximum value, $p_1$ indicates a value of a priority of the first PSFCH at a 1st transmission opportunity, $p_k$ indicates a value of a priority of the first PSFCH at a $k^{th}$ transmission opportunity, k indicates the $k^{th}$ transmission opportunity of the first PSFCH, and k is an integer greater than 1.

37. The method according to any one of claims 29 to 36, wherein the priority comprises a channel access priority CAPC class or a sidelink priority.

38. The method according to claim 37, wherein when the priority comprises a CAPC class, the priority of the first PSFCH is determined according to:

pre-defined information in a protocol;
pre-configuration information;
network configuration information; or
a channel access priority of a physical sidelink shared channel PSSCH corresponding to the first PSFCH.

39. The method according to any one of claims 27 to 38, wherein
a receiving terminal for sidelink transmission of the second terminal device comprises the first terminal device, and/or a receiving terminal for the N PSFCHs comprises the second terminal device, wherein the second terminal device is a terminal device that initiates the first shared COT.

40. The method according to any one of claims 27 to 39, wherein the M is less than or equal to a maximum number of PSFCHs that the first terminal device transmits at a same time.

41. The method according to any one of claims 27 to 40, wherein the N PSFCHs are within a first resource block set or a first channel.

42. The method according to claim 41, wherein the first channel is determined based on a physical resource block PRB corresponding to a channel access procedure, or the first channel is determined based on a frequency domain range of a channel access procedure or a listen-before-talk LBT procedure, or a bandwidth of the first channel is 20 MHz.

43. The method according to claim 41 or 42, wherein the first resource block set is within the first channel.

44. A communication method, comprising:

transmitting, by a network device, second configuration information,

wherein the second configuration information is used to determine a first value, a first class is used to determine whether a first PSFCH in N physical sidelink feedback channels PSFCHs to be transmitted at a first instant belongs to M PSFCHs, the M PSFCHs are PSFCHs transmitted at the first instant; in a case in which a priority of the first PSFCH is less than or equal to the first value, the first PSFCH belongs to the M PSFCHs, and the first instant is within a first shared channel occupancy time COT, wherein N is a positive integer, and M is an integer less than or equal to N.

45. A terminal device, wherein the terminal device is a first terminal device, and the terminal device comprises:

   a determining unit, configured to determine M PSFCHs from N physical sidelink feedback channels PSFCHs to be transmitted; and
   a first transmitting unit, configured to transmit the M PSFCHs,
   wherein the N PSFCHs are PSFCHs to be transmitted at a first instant, the first instant is within a first shared channel occupancy time COT, N is a positive integer, and M is an integer less than or equal to N.

46. The terminal device according to claim 45, wherein a receiving terminal for the M PSFCHs is a terminal device that initiates the first shared COT.

47. The terminal device according to claim 45 or 46, wherein the N PSFCHs comprise a first PSFCH, and whether the first PSFCH belongs to the M PSFCHs is determined based on a priority of the first PSFCH.

48. The terminal device according to claim 47, wherein in a case in which a value of the priority of the first PSFCH is less than or equal to a first value, the first PSFCH belongs to the M PSFCHs.

49. The terminal device according to claim 47, wherein in a case in which a value of the priority of the first PSFCH is less than or equal to a first value, the M is equal to the N.

50. The terminal device according to claim 48 or 49, wherein the first value is determined based on one or more of following information: indication information used for indicating the first shared COT, a value of a channel access priority used when the terminal device that initiates the first shared COT performs the channel access, network configuration information, or pre-configuration information.

51. The terminal device according to any one of claims 47 to 50, wherein the first instant corresponds to a first transmission opportunity of the first PSFCH, and the priority of the first PSFCH is determined based on the first transmission opportunity.

52. The terminal device according to claim 51, wherein a value of the priority of the first PSFCH decreases as an index value of a transmission opportunity corresponding to the first PSFCH increases.

53. The terminal device according to claim 51 or 52, wherein a value of the priority of the first PSFCH is greater than or equal to a minimum value of the priority.

54. The terminal device according to any one of claims 51 to 53, wherein a value $p_k$ of the priority of the first PSFCH meets: $p_k = \max(p_1 - (k-1), 1)$, wherein max indicates calculating a maximum value, $p_1$ indicates a value of a priority of the first PSFCH at a 1st transmission opportunity, $p_k$ indicates a value of a priority of the first PSFCH at a $k^{th}$ transmission opportunity, k indicates the $k^{th}$ transmission opportunity of the first PSFCH, and k is an integer greater than 1.

55. The terminal device according to any one of claims 47 to 54, wherein the priority comprises a channel access priority CAPC class or a sidelink priority.

56. The terminal device according to claim 55, wherein when the priority comprises a CAPC class, the priority of the first PSFCH is determined according to:

   pre-defined information in a protocol;
   pre-configuration information;
   network configuration information; or
   a channel access priority of a physical sidelink shared channel PSSCH corresponding to the first PSFCH.

57. The terminal device according to any one of claims 45 to 56, wherein
   a receiving terminal for sidelink transmission of a second terminal device comprises the first terminal device, and/or a receiving terminal for the N PSFCHs comprises the second terminal device, wherein the second terminal device is a terminal device that initiates the first shared COT.

58. The terminal device according to any one of claims 45 to 57, wherein the terminal device further comprises:

   a first channel access unit, configured to perform a first type of channel access procedure within the first shared COT,

wherein a type of the first type of channel access procedure is determined based on one or more of following information: a sidelink subcarrier spacing, a time interval between the first instant and an end instant of a previous sidelink transmission, indication information received by the first terminal device, or whether sidelink transmission is detected by the first terminal device before the first instant in a first slot, wherein the first slot is a slot where the first instant is located.

59. The terminal device according to claim 58, wherein a type of the first type of channel access procedure comprises type 2A channel access procedure, type 2B a channel access procedure, or type 2C channel access procedure.

60. The terminal device according to claim 58 or 59, wherein in a case in which the type of the first type of channel access procedure is determined based on the time interval between the first instant and the end instant of the previous sidelink transmission,

if the time interval is greater than or equal to 25 microseconds, the type of the first type of channel access procedure is type 2A channel access procedure; and/or
if the time interval is equal to 16 microseconds, or the time interval is greater than or equal to 16 microseconds and less than 25 microseconds, the type of the first type of channel access procedure is type 2B channel access procedure; and/or
if the time interval is less than or equal to 16 microseconds, the type of the first type of channel access procedure is type 2C channel access procedure.

61. The terminal device according to claim 58 or 59, wherein in a case in which the type of the first type of channel access procedure is determined based on the indication information, the indication information is comprised in information used for indicating the first shared COT.

62. The terminal device according to claim 58 or 59, wherein in a case in which no sidelink transmission is detected before the first instant in the first slot, the type of the first type of channel access procedure is a channel access type 2A.

63. The terminal device according to any one of claims 45 to 62, wherein the M is less than or equal to a maximum number of PSFCHs that the first terminal device transmits at a same time.

64. The terminal device according to any one of claims 45 to 63, wherein the N PSFCHs are within a first resource block set or a first channel.

65. The terminal device according to claim 64, wherein the first channel is determined based on a physical resource block PRB corresponding to a channel access procedure, or the first channel is determined based on a frequency domain range of a channel access procedure or a listen-before-talk LBT procedure, or a bandwidth of the first channel is 20 MHz.

66. The terminal device according to claim 64 or 65, wherein the first resource block set is within the first channel.

67. The terminal device according to any one of claims 64 to 66, wherein the terminal device further comprises:
an acquisition unit, configured to acquire first configuration information, wherein the first configuration information is used to configure a guard band, and a frequency domain start location and a frequency domain end location of the first resource block set are determined based on the first configuration information.

68. The terminal device according to any one of claims 45 to 67, wherein the terminal device further comprises:
a second channel access unit, configured to: in a case in which the M is less than the N, perform a second type of channel access procedure, wherein if a channel is idle, the first terminal device is configured to transmit remaining PSFCHs other than the M PSFCHs in the N PSFCHs at the first instant.

69. The terminal device according to claim 68, wherein a type of the second type of channel access procedure comprises a channel access procedure type 1 or type 2A channel access procedure.

70. The terminal device according to claim 69, wherein in a case in which the type of the second type of channel access procedure is the channel access procedure type 1, a channel access priority is determined according to one or more of:

a highest class or a lowest class in CAPC classes corresponding to the remaining PSFCHs;
a highest priority or a lowest priority in sidelink priorities corresponding to the remaining PSFCHs; or
pre-configuration information or network configuration information.

71. A terminal device, wherein the terminal device is a second terminal device, and the terminal device comprises:

a receiving unit, configured to receive a second physical sidelink feedback channel PSFCH, wherein the second PSFCH belongs to M PSFCHs, the M PSFCHs are determined from N PSFCHs to be transmitted and transmitted by a first terminal device at a first instant, and the first instant is within a first shared channel occupancy time COT, wherein N is a positive integer, and M is an integer less than or equal to N.

72. The terminal device according to claim 71, wherein a receiving terminal for the M PSFCHs is a terminal device that initiates the first shared COT.

73. The terminal device according to claim 71 or 72, wherein the N PSFCHs comprise a first PSFCH, and whether the first PSFCH belongs to the M PSFCHs is determined based on a priority of the first PSFCH.

74. The terminal device according to claim 73, wherein in a case in which a value of the priority of the first PSFCH is less than or equal to a first value, the first PSFCH belongs to the M PSFCHs.

75. The terminal device according to claim 73, wherein in a case in which a value of the priority of the first PSFCH is less than or equal to a first value, the M is equal to the N.

76. The terminal device according to claim 74 or 75, wherein the first value is determined based on one or more of following information: indication information used for indicating the first shared COT, or a value of a channel access priority used when the terminal device that initiates the first shared COT performs channel access, network configuration information, or pre-configuration information.

77. The terminal device according to any one of claims 73 to 76, wherein the first instant corresponds to a first transmission opportunity of the first PSFCH, and the priority of the first PSFCH is determined based on the first transmission opportunity.

78. The terminal device according to claim 77, wherein a value of the priority of the first PSFCH decreases as an index value of a transmission opportunity corresponding to the first PSFCH increases.

79. The terminal device according to claim 77 or 78, wherein a value of the priority of the first PSFCH is greater than or equal to a minimum value of the priority.

80. The terminal device according to any one of claims 77 to 79, wherein a value $p_k$ of the priority of the first PSFCH meets: $p_k = \max(p_1 - (k-1), 1)$, wherein max indicates calculating a maximum value, $p_1$ indicates a value of a priority of the first PSFCH at a $1^{st}$ transmission opportunity, $p_k$ indicates a value of a priority of the first PSFCH at a $k^{th}$ transmission opportunity, k indicates the $k^{th}$ transmission opportunity of the first PSFCH, and k is an integer greater than 1.

81. The terminal device according to any one of claims 73 to 80, wherein the priority comprises a channel access priority CAPC class or a sidelink priority.

82. The terminal device according to claim 81, wherein when the priority comprises a CAPC class, the priority corresponding to the first PSFCH is determined according to:

pre-defined information in a protocol;
pre-configuration information;
network configuration information; or
a channel access priority of a physical sidelink shared channel PSSCH corresponding to the first PSFCH.

83. The terminal device according to any one of claims 71 to 82, wherein
a receiving terminal for sidelink transmission of a second terminal device comprises the first terminal device, and/or a receiving terminal for the N PSFCHs comprises the second terminal device, wherein the second terminal device is a terminal device that initiates the first shared COT.

84. The terminal device according to any one of claims 71 to 82, wherein the M is less than or equal to a maximum number of PSFCHs that the first terminal device transmits at a same time.

85. The terminal device according to any one of claims 71 to 84, wherein the N PSFCHs are within a first resource block set or a first channel.

86. The terminal device according to claim 85, wherein the first channel is determined based on a physical resource block PRB corresponding to a channel access procedure, or the first channel is determined based on a frequency domain range of a channel access procedure or a listen-before-talk LBT procedure, or a bandwidth of the first channel is 20 MHz.

87. The terminal device according to claim 85 or 86, wherein the first resource block set is within the first channel.

88. A network device, comprising:

a second transmitting unit, configured to transmit second configuration information,

wherein the second configuration information is used to determine a first value, a first class is used to determine whether a first PSFCH in N physical sidelink feedback channels PSFCHs to be transmitted at a first instant belongs to M PSFCHs, the M PSFCHs are PSFCHs transmitted at the first instant; in a case in which a priority of the first PSFCH is less than or equal to the first value, the first PSFCH belongs to the M PSFCHs, and the first instant is within a first shared channel occupancy time COT, wherein N is a positive integer, and M is an integer less than or equal to N.

89. A terminal device, comprising a transceiver, a memory, and a processor, wherein the memory is configured to store a program, and the processor is configured to invoke the program in the memory, to cause the terminal device to execute the method according to any one of claims 1 to 43.

90. A network device, comprising a memory and a processor, wherein the memory is configured to store a program, and the processor is configured to invoke the program in the memory, to cause the network device to execute the method according to claim 44.

91. An apparatus, comprising a processor configured to invoke a program from a memory, to cause the apparatus to execute the method according to any one of claims 1 to 43.

92. An apparatus, comprising a processor configured to invoke a program from a memory, to cause the apparatus to execute the method according to claim 44.

93. A chip, comprising a processor configured to invoke a program from a memory, to cause a device on which the chip is installed to execute the method according to any one of claims 1 to 43.

94. A chip, comprising a processor configured to invoke a program from a memory to cause a device on which the chip is installed to execute the method according to claim 44.

95. A computer-readable storage medium, wherein the computer-readable storage medium stores a program, and the program causes a computer to execute the method according to any one of claims 1 to 43.

96. A computer-readable storage medium, wherein the computer-readable storage medium stores a program, and the program causes a computer to execute the method according to claim 44.

97. A computer program product, comprising a program, wherein the program causes a computer to execute the method according to any one of claims 1 to 43.

98. A computer program product, comprising a program, wherein the program causes a computer to execute the method according to claim 44.

99. A computer program, wherein the computer program causes a computer to execute the method according to any one of claims 1 to 43.

100.
A computer program, wherein the computer program causes a computer to execute the method according to claim 44.

FIG. 1

FIG. 2

Terminal device
1

Terminal device
2

FIG. 3

Communication cluster

Terminal device
2

Terminal device
1

Terminal device
3

Terminal device
4

FIG. 4

| AGC | PSCCH PSSCH | GP |

FIG. 5

FIG. 6

FIG. 7

PSSCH PSFCH GP

FIG. 8

slot0  slot1  slot2  slot3  slot4  slot5  slot6  slot7  slot8  slot9  slot10  slot11  slot12

First set of PSFCH  Second set of  Third set of PSFCH  Fourth set of PSFCH
⊠ transmission  PSFCH transmission  transmission  ▓ transmission  ⊿PSSCH ☐ GP
resources  ▓ resources  ☐ resources  ▓ resources

**FIG. 9**

| Determine M PSFCHs from N PSFCHs to be transmitted | S1010 |
|---|---|
| Transmit the M PSF | S1020 |

**FIG. 10**

| Receive a second PSFCH | S1110 |
|---|---|

**FIG. 11**

| Transmit second configuration information | S1210 |
|---|---|

**FIG. 12**

Terminal device 1300

Determining unit 1310

First transmitting unit1320

**FIG. 13**

Terminal device 1400

Receiving unit 1410

FIG. 14

Network device 1500

Second transmitting unit1510

FIG. 15

Apparatus 1600

Processor 1610

Memory 1620

Transceiver 1630

FIG. 16

## INTERNATIONAL SEARCH REPORT

| International application No. |
|---|
| **PCT/CN2022/119033** |

| **A.** | **CLASSIFICATION OF SUBJECT MATTER** |
|---|---|
| | H04W 74/00(2009.01)i |

According to International Patent Classification (IPC) or to both national classification and IPC

| **B.** | **FIELDS SEARCHED** |
|---|---|

Minimum documentation searched (classification system followed by classification symbols)

    H04W

Documentation searched other than minimum documentation to the extent that such documents are included in the fields searched

Electronic data base consulted during the international search (name of data base and, where practicable, search terms used)

    CNABS; CNTXT; VEN; WOTXT; EPTXT; USTXT; CNKI; 3GPP: 物理侧行反馈信道, 共享, 信道占用时间, 优先级, 选择, PSFCH, COT, sharing, priority, select, choose

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | OPPO. "FL summary for AI 9.4.1.1: SL-U channel access mechanism (EOM)" *3GPP TSG RAN WG1 #110, R1-2207793*, 28 August 2022 (2022-08-28), sections 2-4 | 1-43, 45-87, 89, 91, 93, 95, 97, 99 |
| X | OPPO. "FL summary for AI 9.4.1.1: SL-U channel access mechanism (EOM)" *3GPP TSG RAN WG1 #110, R1-2207790*, 28 August 2022 (2022-08-28), sections 2-4 | 1-43, 45-87, 89, 91, 93, 95, 97, 99 |
| A | CN 114467271 A (QUALCOMM INC.) 10 May 2022 (2022-05-10) entire document | 1-100 |
| A | WO 2021208031 A1 (QUALCOMM INC. et al.) 21 October 2021 (2021-10-21) entire document | 1-100 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2022** | **16 January 2023** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/119033**

| Patent document cited in search report | | | Publication date (day/month/year) | Patent family member(s) | | | Publication date (day/month/year) |
|---|---|---|---|---|---|---|---|
| CN | 114467271 | A | 10 May 2022 | WO | 2021067876 | A1 | 08 April 2021 |
| | | | | EP | 4039052 | A1 | 10 August 2022 |
| | | | | US | 2021105744 | A1 | 08 April 2021 |
| | | | | IN | 202227011502 | A | 15 July 2022 |
| | | | | US | 11425691 | B2 | 23 August 2022 |
| WO | 2021208031 | A1 | 21 October 2021 | None | | | |

Form PCT/ISA/210 (patent family annex) (January 2015)